# EUROPEAN PATENT APPLICATION

(11) **EP 4 582 883 A1**
(43) Date of publication of application: **09.07.2025**
(21) Application number: 24150542.9
(22) Date of filing: 05.01.2024
(51) Int. Cl.: G05B 11/42, G05B 13/04, G05B 17/02, G05B 23/02

(54) **METHOD OF DETERMINING AT LEAST ONE OPERATIONAL PARAMETER OF A COMPONENT OF A CLOSED CONTROL LOOP**

(71) Applicant: Siemens Aktiengesellschaft, 80333 München (DE)
(72) Inventor: Gruner, Tobias, 81675 München (DE); Mittermeier, Ludwig Andreas, 81541 München (DE); Müller, Harald, 82229 Seefeld-Hechendorf (DE); Zeitler, Daniel, 91281 Kirchenthumbach (DE)
(74) Representative: Siemens Patent Attorneys

(57) **Abstract**

A Method of Determining at least one operational parameter of a component of a closed control loop, the closed control loop comprising a controller for receiving an error signal and producing a control signal, a system to be controlled by means of the control signal and producing an output, a sensor for measuring the output and producing a measured output signal, comprising the steps: Determining model parameters of a model of at least one non-controllable disturbance factor of the closed control loop; Determining a quality measure of the closed control loop and Determining, from the model, at least one controllable parameter of the controller, the system and/or the sensor such that the quality measure is improved.

## Description

The invention relates to a method of determining at least one operational parameter of a component of a closed control loop.

Industrial control systems often comprise closed control loops to regulate states of a system.

One example for a system that may be controlled in this way is an electric motor, for example a DC machine. The motor is supposed to run at a selectable reference speed which is the control target. This is achieved by having a sensor measure the speed of the motor. The measured speed is then compared to a reference speed with the difference between these speeds being used to create an error signal. Said error signal is fed to a controller which creates a control signal to control an actuator of the system, e.g. a current supply of the motor.

However, when the supply current of the motor is changed, it takes a certain time for the motor speed to reach its new equilibrium point where it will then stay constant. The system thus introduces a time lag.

Furthermore, the sensor will have an inherent precision limit. It is thus said that the sensor is not ideal or perfect but introduces a disturbance into the close control loop. This disturbance does not only comprise the above-mentioned time lag but also measurement inaccuracies, for example inaccuracies from linearizing an output of a non-linear sensor or effects of ageing.

To be able to handle such disturbances, most well-known types of controllers have parameters that may be set according to the requirements of the closed control loop.

One frequently used controller is a PID-controller, wherein the P stands for "proportional", the I stands for "integral" and the D stands for "differential". It is frequently used since it can compensate for effects that are based on a derivative or an integral of the system output.

Thus, PID-controllers may also be advantageously used to control a motor speed or a position of an actuator. The system state may comprise, in such systems, the speed and/or position of an object driven by the actuator. The sensor would measure said speed and/or position and feed the measured output back to an entrance of the controller for which it would be combined with a reference value to form the error signal. The controller would then produce control signals, e.g. for controlling the supply current, for the actuator, e.g. the motor, as a system input.

A PID-controller requires three parameters to be configured. In general, choosing reasonable values for the control parameters of the controller is a hard problem.

For very simple systems, the control loop can be modelled on the type and parameters of the controller can be derived by applying control theory. However, for more complex systems, a standard controller type, such as the above-mentioned PID-controller, is chosen and its parameters are adapted empirically.

However, such empirically determined parameters often do not take into account the technical implementation of the control loop components, e.g. the sensor logic and their performance characteristics which have an impact on a control loop quality. There is currently no systematic way to consider these effects in order to optimize controller quality.

In some instances, the control loop is to be implemented in a distributed way. For example, the controller, the interface to the system and the sensors are running on different computers that are connected through a network. For example, the sensor may be connected to the controller via Ethernet, WiFi or Bluetooth, all of which may introduce a variable time lag depending on how crowded the underlying network is. Thus, all these components, and their network connections, cause additional disturbance for which, again, no systematic way is known to consider these effects when optimizing the controller quality.

Given the above, it is an object of the invention to provide a method for determining one or more parameters for configuring at least one component of a closed control loop, wherein the closed control loop comprises disturbances that cannot be captured well by empirical methods.

To this end, a method according to claim 1 and a computer program product according to claim 13 are proposed. Advantageous embodiments are subject of the dependent claims.

The problem is solved by a Method of Determining at least one operational parameter of a component of a closed control loop, the closed control loop comprising a controller for receiving an error signal and producing a control signal, a system to be controlled by means of the control signal and producing an output, a sensor for measuring the output and producing a measured output signal, comprising the steps: Determining model parameters of a model of at least one non-controllable disturbance factor of the closed control loop; Determining a quality measure of the closed control loop and Determining, from the model, at least one controllable parameter of the controller, the system and/or the sensor such that the quality measure is improved.

The operational parameters are thus determined automatically, without recourse to empiric methods.

In some embodiments, the step of Determining at least one controllable parameter is carried out in a simulation of the closed control loop at least once.

Such a dry run may show problems with the determined parameters that would lead to unwanted results in the physical world.

In some embodiments, the step of Determining at least one controllable parameter is carried out repeatedly during operation of the closed control loop.

In this way, the parameters may be adapted to different situations easily.

In some embodiments, the quality measure may be determined as a control loop quality measure.

In some embodiments, the quality measure may be determined from the error signal.

Thus, the operational parameters may be chosen to maximize the quality of the control loop.

In some embodiments, the quality measure is determined to additionally be dependent on at least one more quality criterion.

In this way, the operational parameters may be optimized for other criteria, such as energy consumption.

In some embodiments the at least one operational parameter is a control parameter of the sensor for improving the quality measure.

In some embodiments the following steps are carried out repeatedly during operation of the closed control loop: Determining whether the model parameter has changed since it was determined and if the model parameter has changed more often than a threshold amount, repeating the step of Determining the model parameter and/or the step of Determining the at least one controllable parameter.

In this way, the operational parameters may be adapted, in particular to changing disturbance factors.

In some embodiments, after the step of Determining the at least one controllable parameter was repeated to determine the controllable parameter of the sensor, the step of Determining the at least one controllable parameter is repeated for the controller.

In some embodiments, after the step of Determining the at least one controllable parameter was repeated to determine the controllable parameter of the system, the step of Determining the at least one controllable parameter is repeated to determine the controllable parameter of the sensor.

In some embodiments, wherein the step of Determining at least one controllable parameter of the controller is carried out by applying an optimization method, by applying a heuristic and/or by applying a machine learning method.

In some embodiments, wherein the quality measure is determined to improve when a resource utilization is reduced.

The problem is also solved by a computer program product directly loadable into an internal memory of a digital computer, comprising software code portions for performing the methods and/or steps of the previously defined methods when said product is run on said digital computer.

Further embodiments and advantages may be gathered from the enclosed figures which schematically show embodiments of the invention. In particular:
Fig. 1 a schematic diagram of a closed control loop to which a method according to an embodiment of the invention may be applied;
Fig. 2 a schematic diagram of a closed control loop as in Fig. 1 showing possible controllable parameters and
Fig. 3 a schematic diagram of a method according to an embodiment of the current invention.

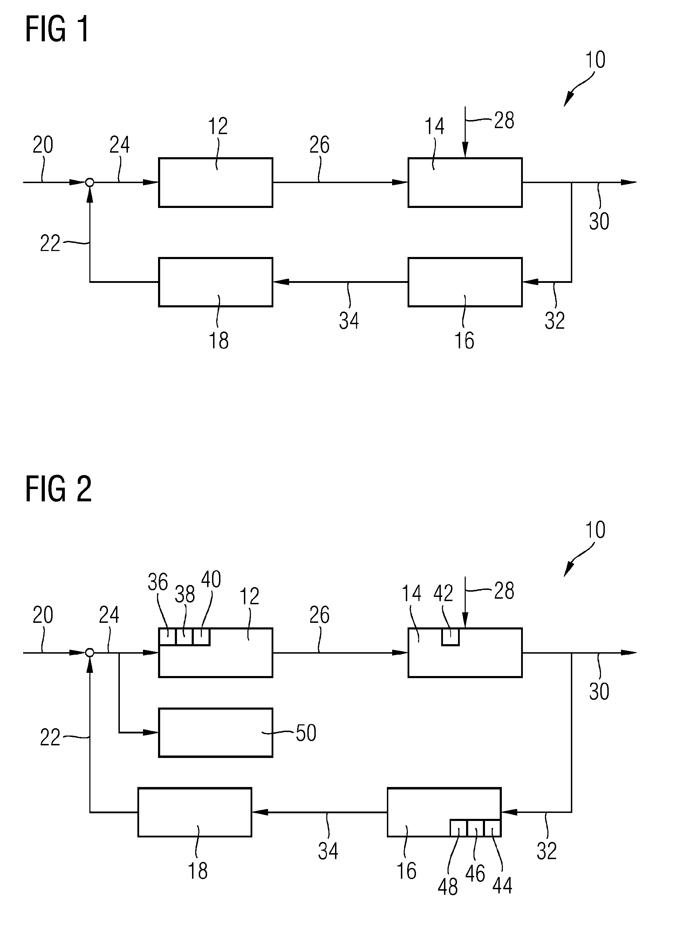

A closed control loop 10 as shown in figure 1 is a tool for modelling complex systems and comprises a variety of components such as a controller 12, a system 14, at least one sensor 16 and a disturbance factor 18. The closed control loop 10 is provided with a reference value 20 which is considered the control target and is compared to a fed back disturbed measured output 22 the comparison yields an error signal 24 which is fed to the controller 12.

The controller 12 provides a control signal 26 is an input for the system 14. The system 14 is influenced by one or more system disturbance factors 28 which may, in particular, affect interpretation of the control signal 22 (input disturbance) or a system output 30 (output disturbance). The system output 30 is also used as a feedback 32 to be fed into the sensor 16 which in turn produces a measured output 34 which is disturbed by the disturbance factor 18.

As said above, the diagram in Fig. 1 is used as a tool for understanding the closed control loop 10. The boxes and the diagram may, although they look similar to each other, refer to physical or virtual objects or constructs. The controller 12 may, for example, be implemented as a software module in a computer which comprises inputs for the measured output 34. The system 14 may be any physical system comprising an actuator for which a system state may be output as the system output 30.

The sensor 16 may, for example, be a sensor 16 measuring the system output 30 whereas the disturbance factor 18 represents the disturbances introduced by properties of the sensor 16. The disturbance factor 18 may, for example, comprise a transmission delay over a network or measurement errors introduced by the actual sensor device used by the sensor 16.

As shown in Fig. 2 for one particular embodiment that is used as an example but not to restrict the scope of the invention, the components of the closed control loop 10 may have configurable parameters that influence how these components work.

The controller 12 has a first control parameter 36, a second control parameter 38 and a third control parameter 40. In this embodiment, the controller 12 is a PID-controller and the control parameters 36, 38, 40 configure a behavior of the PID-controller.

The system 14 has a system control parameter 42 which configures an aspect of how the system 14 operates. This control parameter 42 may, for example, control a process speed, for example a speed of a conveyor belt, a velocity of a tool machine or a velocity of an autonomous vehicle.

In some embodiments, the sensor 16 is configurable by means of a first sensor control parameter 44, a second sensor control parameter 46 and/or a third sensor control parameter 48.

In some embodiments, the controller 12 may comprise a different controller type and may thus have more or fewer than three control parameters 36, 38, 40. In the same way, in some embodiments, the system 14 may have more or fewer than one system control parameter 42. Also, in some embodiments, the sensor 16 may be configurable by more or fewer than three sensor control parameters 44, 46, 48.

The closed control loop 10 may further comprise a control loop quality determination device 50. The control loop quality determination device 50 is configured to receive the error signal 24 and to determine from said error signal 24 a control loop quality measure representing a quality of the closed control loop 10. In some embodiments, the control loop quality determination device 50 may determine standard deviation of the error signal 24 over a predetermined time period and provide this as the quality measure. What particular calculation makes a good quality measure may be strongly dependent on the object of the closed control loop. Various methods of determining a quality measure are known.

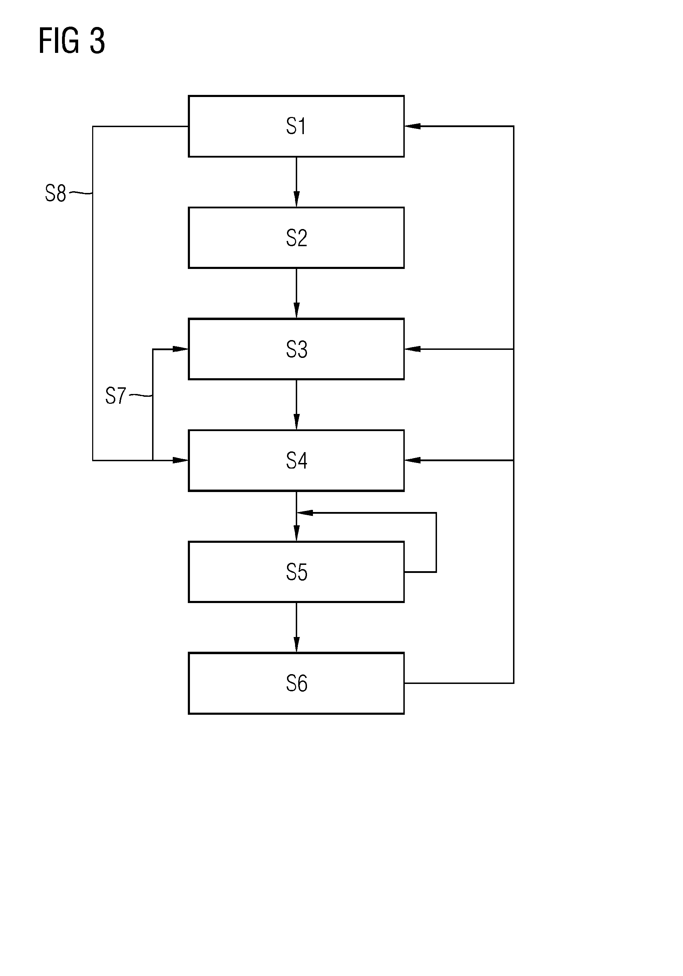

To determine at least one operational parameter such as the first control parameter 36, the second control parameters 38, the third control parameter 40, the system control parameter 42, the first sensor control parameter 44, the second sensor control parameter 46 and/or the third sensor control parameter 48, in a first method step S1 as shown in Fig. 3, model parameters of a model of at least one non-controllable disturbance factor 18, 28 of the closed control loop 10 are determined.

In a second method step S2, the quality measure of the closed control loop 10 is determined. To this end, the second method step may comprise measuring, simulating and/or calculating a behaviour of the closed control loop 10.

In a third method step S3, the model of the non-controllable disturbance factor 18, 28 and the quality measure are employed to determine at least one operational parameter 36, 38, 40 of the controller such that the quality measure is improved. To this end, in this step, the operational parameter 36, 38, 40 may be determined using optimization, e.g. mixed integer programming, heuristics and/or artificial intelligence or machine learning.

This third method step S3 may be carried out in a simulation of the closed control loop 10 or may be carried out repeatedly during operation of the closed control loop 10.

A quality measure may be considered to have improved for example when the standard deviation of the error signal has decreased.

In some embodiments, the third method step S3 may be carried out such that not only the quality measure is improved but that additional optimization criteria are improved. Such optimization criteria may include, for example, an energy consumption which would be considered to have been improved if it is lowered. In this way, an energy consumption may be lowered while the quality measure is kept at a predefined or selectable acceptable level.

In a fourth method step S4, at least one operational and/or controllable parameter 44, 46, 48 of the sensor 16 may be determined in a way similar to the third method step such that the quality measure and, possibly, an additional optimization criterion is improved.

In a fifth method step S5, which may be carried out repeatedly during operation of the closed control loop 10, it is determined whether any of the model parameters, in particular any of the disturbance factors 18, 28, has changed since it was last determined. If any of the model parameters has changed in a significant way, such as, for example, by a threshold amount, in a sixth method step S6, the first method step, the third method step and/or the fourth method step are repeated.

In a seventh method step S7, after the fourth step was repeated, the third method step is repeated as well.

In an eighth method step S8, after the first method step S1 was repeated to determine the operational parameter of the system 14, the fourth step S4 is repeated as well.

By applying some or all of these method steps S1 through S8, the parameters 36, 38, 40, 42, 44, 46, 48 of an industrial control system comprising a closed control loop 10 need not be determined in an empirical approach. Instead, the operational parameters 36, 38, 40, 42, 44, 46, 48 are derived automatically in an initial setup phase of the industrial control system and are continuously adapted throughout the operational phase.

By extending the operational parameters from mere control parameters 36, 38, 40 to further factors such as parameters 42, 44, 46, 48 of the system 14 and/or the sensor 16 or even the control process itself, there is a much broader scope to influence and optimize the control loop quality. Other than the improved control of quality, the overall resource use and/or energy consumption that are needed to implement the control loop may be reduced.

Also, in particular by means of the repeatedly executed fifth method step S5 of determining whether any of the model parameters has changed, the closed control loop 10 may be dynamically adapted to changing conditions and reduce the degradation of the control loop quality in those cases.

As a further advantage, the applicability of the closed control loop 10 is improved to an increased range of conditions in which the closed control loop 10 becomes feasible.

Also, due to the continuous adaptation described above, industrial control processes relying on the closed control loop 10 according to the invention are improved so that they can continue to work in conditions that would previously have required a reconfiguration.

In some embodiments, the sensor control parameters 44, 46, 48 may comprise, for example, a sample rate, a camera resolution, a compression ratio for camera data, a sample resolution or other parameters.

In some embodiments, the disturbance factors 18, 28 may comprise transmission delays, packet loss and/or sensor inaccuracies.

In some embodiments, the system control parameter 42 may control a processor speed, for example a speed of a conveyor belt, a velocity of a tool machine and/or a velocity of an autonomous vehicle.

Above, a signal may be any physical representation of an information. For example, a signal may simply be a voltage level. A signal may also be a digital signal, transmitted via a computer network such as Wi-Fi, Bluetooth, NB-loT or ethernet.

Any of the method steps as well as the entire method as described may be implemented using a digital computer, e.g. a microcontroller. A computer program product directly loadable into an internal memory of a digital computer may thus be provided, comprising software code portions for performing the methods and/or steps outlined above when said product is run on said digital computer.

Designations such as "first", "second" or "third" are used in this document only to distinguish similar but different items. They do not designate any kind of hierarchy.

Independent of the grammatical term usage, individuals with male, female or other gender identities are included within the term.

## Claims

1. Method of Determining at least one operational parameter of a component of a closed control loop (10), the closed control loop (10) comprising
a controller (12) for receiving an error signal (24) and producing a control signal (26),
a system (14) to be controlled by means of the control signal (26) and producing an output (30),
a sensor (16) for measuring the output (30) and producing a measured output (34) signal, comprising the steps:
Determining, in a first step (S1), model parameters of a model of at least one non-controllable disturbance factor of the closed control loop;
Determining, in a second step (S2), a quality measure of the closed control loop and
Determining, in a third step (S3), from the model, at least one controllable parameter (36, 38, 40, 42, 44, 46, 48) of the controller, the system and/or the sensor such that the quality measure is improved.

2. Method according to claim 1, wherein the third step (S3) of Determining at least one controllable parameter (36, 38, 40, 42, 44, 46, 48)is carried out in a simulation of the closed control loop (10) at least once.

3. Method according to claim 1 or 2, wherein the third step (S3) of Determining at least one controllable parameter (36, 38, 40, 42, 44, 46, 48) is carried out repeatedly during operation of the closed control loop (10).

4. Method according to any of the previous claims, wherein the quality measure is determined as a closed control loop (10) quality measure.

5. Method according to claim 4, wherein the quality measure is determined from the error signal(24).

6. Method according to any of the previous claims, wherein the quality measure is determined to additionally be dependent on at least one more quality criteria.

7. Method according to any of the previous claims, comprising a fourth step (S4) of Determining at least one controllable parameter (44, 46, 48) of the sensor for improving the quality measure.

8. Method according to any of the previous claims, wherein the following steps are carried out repeatedly during operation:
Determining, in a fifth step (S5), whether the model parameter has changed since it was determined and
If the model parameter has changed more than a threshold amount, repeating the first step (S1) of Determining the model parameter and/or the third step (S3) of Determining the at least one controllable parameter (36, 38, 40, 42, 44, 46, 48).

9. Method according to claim 8, wherein, after the third step (S3) of Determining the at least one controllable parameter (36, 38, 40, 42, 44, 46, 48) was repeated to determine the controllable parameter (44, 46, 48) of the sensor, the third step (S3) of Determining the at least one controllable parameter (36, 38, 40) is repeated for the controller.

10. Method according to claim 8 or 9, wherein, after the third step (S3) of Determining the at least one controllable parameter (42) was repeated to determine the controllable parameter of the system, the third step (S3) of Determining the at least one controllable parameter is repeated to determine the controllable parameter (44, 46, 48) of the sensor.

11. Method according to any of the previous claims, wherein the third step (S3) step of Determining at least one controllable parameter (36, 38, 40) of the controller is carried out by applying an optimization method, by applying a heuristic and/or by applying a machine learning method.

12. Method according to any of the previous claims, wherein the quality measure is determined to improve when a resource utilization is reduced.

13. A computer program product directly loadable into an internal memory of a digital computer, comprising software code portions for performing the methods and/or steps of claims 1-12 when said product is run on said digital computer.
